# EUROPÄISCHE PATENTSCHRIFT

(11) **EP 1 998 195 B1**
(45) Veröffentlichungstag und Bekanntmachung des Hinweises auf die Patenterteilung: **15.07.2015**
(21) Anmeldenummer: 08009526.8
(22) Anmeldetag: 24.05.2008
(51) Int. Cl.: G02B 5/28, F21V 9/00

(54) **Interferenzfilter und Verfahren zu dessen Herstellung**
Interference filter and method for its production
Filtre d'interférence et son procédé de fabrication

(30) Priorität: 31.05.2007 DE 102007025600
(43) Veröffentlichungstag der Anmeldung: 03.12.2008
(73) Patentinhaber: Schott AG, 55122 Mainz (DE)
(72) Erfinder: Brauneck, Ulf, Dr., 64823 Gross-Umstadt (DE); Jeschkowski, Ulrich, Dr., 55120 Mainz (DE); Strohmaier, Thomas, 55128 Mainz (DE); Erbach, Wolfgang, 55452 Guldental (DE)
(74) Vertreter: Herden, Andreas F.

(56) Entgegenhaltungen:
- EP-A- 1 498 259
- EP-A- 1 705 512
- WO-A-02/31058
- US-A- 4 045 125
- US-A- 4 934 788
- US-B1- 6 590 702

## Beschreibung

Die Erfindung betrifft allgemein Interferenzfilter. Insbesondere betrifft die Erfindung Interferenzfilter für die UV-Lithographie.

Ein Einsatzgebiet für hochwertige UV-Interferenzfilter liegt unter anderem in der Lithographie bei der Herstellung von Halbleiter-Bauelementen. Beispielsweise werden in sogenannten Steppern Interferenzfilter eingesetzt, um aus dem Spektrum der üblicherweise verwendeten Dampflampen möglichst monochromatisches Licht auszufiltern. In einem Stepper wird ein Wafer, beziehungsweise der aufgetragene Photolack schrittweise über eine verkleinert auf den Wafer projizierte Maske belichtet.

Dokument WO 02/31058 A1 offenbart ein Verfahren zur Herstellung eines dielektrischen Transmissions Interferenzfilters.

Vielfach wird dazu die i-Linie des Quecksilbers einer Quecksilber-Dampflampe verwendet. An den Filter zur Ausfilterung dieses Lichts ergeben sich hier besondere Anforderungen. Mit kleinerer Wellenlänge sinken auch die Toleranzen in der optischen Dicke der Interferenzschichten entsprechend. Die Toleranzen müssen nicht nur bei einem neu eingebauten Filter eingehalten werden, auch an die Langzeitstabilität werden hohe Anforderungen gestellt. Hier sollte sich über längere Zeit weder die Transmission, noch die Lage der Kanten des oder der Transmissionsfenster ändern.

Der Erfindung liegt daher die Aufgabe zugrunde, UV-Interferenzfilter mit verbesserter Langzeitstabilität bereitzustellen. Diese Aufgabe wird durch den Gegenstand der unabhängigen Ansprüche gelöst. Vorteilhafte Ausgestaltungen und Weiterbildungen der Erfindung sind in den jeweiligen abhängigen Ansprüchen angegeben.

Demgemäß ist ein Verfahren zur Herstellung eines dielektrischen Transmissions-Interferenzfilters wie in Anspruch 1 definiert vorgesehen.

Zusätliche Ausführungsbeispiele sind in Ansprüchen 2-13 definiert.

Bei einem Transmissionsfilter ist es dabei selbstverständlich zweckmäßig, ein Substrat auszuwählen, welches im Transmissionsfenster des Schichtsystems transparent ist.

Das erfindungsgemäße Verfahren besteht mit anderen Worten darin, zur Herstellung eines dielektrischen Interferenzfilters in einer Verdampfungskammer auf einem Substrat abwechselnd Lagen mit höherem Brechungsindex und niedrigerem Brechungsindex abzuscheiden, wobei ein Wechselschichtsystem abgeschieden wird, welches abwechselnde erste und zweite Lagen unterschiedlicher Zusammensetzung der Bestandteile Magnesiumfluorid Bleifluorid und Antimonoxid aufweist, wobei nach der Beschichtung eine Verschiebung der zentralen Wellenlänge eines Transmissions- oder Reflexionsfensters zu kürzeren Wellenlängen in Richtung auf die Designwellenlänge hin erfolgt, indem das beschichtete Substrat getempert und mit UV-Licht bestrahlt wird. Die Verschiebung hin zu kürzeren Wellenlängen wird durch eine Erhöhung des Brechungsindex der betreffenden Lagen bedingt. Mit der Erhöhung des Brechungsindex geht im allgemeinen auch eine wenn auch sehr kleine Verbreiterung des Transmissionsfensters einher..

Durch die Beschichtung wird demgemäß ein Zwischenprodukt für die Herstellung eines dielektrischen UV-Interferenzfilters erhalten, welches ein Substrat und ein darauf abgeschiedenes Wechselschichtsystem mit abwechselnden ersten und zweiten Lagen umfasst, wobei die ersten Lagen und die zweiten Lagen eine sich voneinander unterscheidende Zusammensetzung der Bestandteile Antimonoxid, Bleifluorid und Magnesiumfluorid enthalten, wobei die Schichtdicken der Lagen ein Vielfaches des Viertels einer Designwellenlänge λ betragen, und wobei mittels Temperung und/oder UV-Bestrahlung eine Verschiebung der zentralen Wellenlänge eines Transmissions- oder Reflexionsfensters in Richtung auf die Designwellenlänge hin ausgehend von einer längeren Wellenlänge als die Designwellenlänge erzielbar ist.

Insbesondere Lagen mit niedrigerem Brechungsindex durch Coverdampfen von Magnesiumfluorid und Bleifluorid und Lagen mit höherem Brechungsindex durch Coverdampfen von Bleifluorid und Antimonoxid hergestellt werden, so daß die Lagen mit niedrigerem Brechungsindex eine Mischung von Magnesiumfluorid und Bleifluorid und die Lagen mit höherem Brechungsindex eine Mischung von Bleifluorid und Antimonoxid enthalten. Alternativ ist es auch möglich, daß das Abscheiden der Lagen mit niedrigerem Brechungsindex das Verdampfen von Magnesiumfluorid und Antimonoxid und das Abscheiden der Lagen mit höherem Brechungsindex das Verdampfen von Bleifluorid und Antimonoxid umfasst, so daß die Lagen mit niedrigerem Brechungsindex eine Mischung von Magnesiumfluorid und Antimonoxid und die Lagen mit höherem Brechungsindex eine Mischung von Bleifluorid und Antimonoxid enthalten.

Als zentrale Wellenlänge wird im Sinne der Erfindung bei einem plateauförmigen Transmissionsmaximum die mittlere Wellenlänge des Plateaus, ansonsten die Wellenlänge der maximalen Transmission innerhalb des Fensters verstanden.

Die Bestrahlung kann vor, während oder nach dem Tempern erfolgen. Bevorzugt wird eine Bestrahlung nach dem Tempern.

Es ist hierbei überraschend, daß die zentrale Wellenlänge nach dem Tempern und insbesondere nach der UV-Bestrahlung dann für lange Zeit stabil bleibt, so daß der Filter eine gegenüber anderen dielektrischen Transmissionsfiltern für den UV-Bereich eine wesentlich erhöhte Lebensdauer aufweist.

An sich lassen sich nach derzeitigem Kenntnisstand mit verschiedenen analytischen Methoden praktisch keine Unterschiede des Schichtsystems vor und nach der UV-Bestrahlung feststellen. Die Morphologie der Schichten erscheint beispielsweise bei Betrachtung einer Bruchkante mit einem Rasterelektronenmikroskop unverändert.

Es wird davon ausgegangen, daß der Effekt vornehmlich auf einer Änderung der Zusammensetzung der Schichten beruht. MgF₂ und insbesondere PbF₂ dissoziieren beim Aufdampfen und rekombinieren beim Abscheiden. Hierbei kann es dann zu einer unvollständigen Rekombination kommen, da Fluor leichter flüchtig ist, so daß unterstöchoimetrische Schichten erhalten werden.

Die UV-Bestrahlung bewirkt hier offensichtlich eine Nachbeladung mit Sauerstoff, etwa aufgrund von UVangeregter Sauerstoff-Migration, was dann zu einer Änderung der optischen Dichte der Schichten einerseits und einer chemischen Stabilisierung andererseits führt. Wird eine Temperung und UV-Behandlung nicht im Anschluss an die Beschichtung durchgeführt, kann möglicherweise zum Einbau von Wasser an den Sauerstoff-Fehlstellen kommen, was eine chemische Stabilisierung dann dauerhaft verhindert.

Unter einem UV-Transmissionsfilter wird insbesondere ein solcher Filter verstanden, bei welchem die Schichtdicken der Lagen so abgestimmt werden, daß das Transmissionsfenster nach der UV-Bestrahlung eine spektrale Lage aufweist, dessen langwelligere Kante bei einer Wellenlänge kleiner als 450 Nanometern liegt. Die besonders bevorzugte Anwendung der Erfindung liegt in der Herstellung eines Transmissionsfilters für die i-Linie von Quecksilber, um den Filter in einer Belichtungsvorrichtung für die Halbleiter-Lithographie zu verwenden. Demgemäß wird dazu die Schichtdicke der Lagen der Beschichtung so gewählt, daß das Transmissionsfenster insbesondere nach der Bestrahlung mit UV-Licht eine Wellenlänge von 365 Nanometer einschließt.

Allgemein wird für Linienfilter eine gute Schmalbandigkeit gefordert. Vorzugsweise wird daher das Schichtsystem, beziehungsweise die Anzahl und Schichtdicke der Lagen so gewählt, daß das Transmissionsmaximum eine Halbwertsbreite von höchstens 20 Nanometern, vorzugsweise höchstens 15 Nanometern aufweist. Dazu sind Schichtsysteme mit insgesamt mindestens 15 Lagen, vorzugsweise mindestens 20 Lagen geeignet.

Die Bestrahlung mit UV-Licht zur Verschiebung und Stabilisierung der Designwellenlänge wird vorzugsweise für eine Dauer von zumindest 5 Stunden, vorzugsweise für eine Dauer von etwa 24 bis 48 Stunden vorgenommen. Als UV-Lichtquelle eignet sich insbesondere eine Quecksilber-Dampflampe oder einer Lampe, welche ebenfalls UV-Licht bei 365 Nanometer Wellenlänge abgibt.

Durch die Bestrahlung und/oder das Tempern wird im allgemeinen eine Verschiebung der zentralen Wellenlänge des Transmissionsfensters um zumindest 0,1 Nanometer, vorzugsweise zumindest 0,2 Nanometer zu kürzeren Wellenlängen hin erreicht. Übliche Werte liegen bei einer Verschiebung im Bereich von 0,2 und 0,5 Nanometern. Bei der im allgemeinen geforderten Schmalbandigkeit führt eine solche Verschiebung jedoch bereits zu erheblichen Transmissionssteigerungen für Linien von Dampflampen, da auch die typischen Linienbreiten nur im Bereich weniger Nanometer liegen.

Das Tempern wird vorzugsweise bei moderaten Temperaturen unterhalb von 250 °C durchgeführt. Die Dauer des Temperns beträgt weiterhin vorzugsweise zumindest 12 Stunden. Als geeignet hat sich zum Beispiel eine Temperung von 24 Stunden bei 100°C erwiesen.

Mit dem Verfahren können besonders vorteilhaft auch großflächige langzeitstabile Filter hergestellt werden. So kann eine Substratfläche mit einer seitlichen Abmessung oder einem Durchmesser von zumindest 100 Millimetern erfindungsgemäß beschichtet und nachbehandelt werden.

Die Erfindung wird nachfolgend genauer unter Bezugnahme auf die beigeschlossenen Zeichnungen näher erläutert. Es zeigen:
- Fig. 1: eine Querschnittansicht durch einen Interferenzfilter, wie er erfindungsgemäß hergestellt werden kann,
- Fig. 2: ein Spektrum einer Quecksilber-Dampflampe mit einem überlagerten Ausschnitt der spektralen Transmission eines Interferenzfilters,
- Fig. 3: eine Darstellung der Transmissionscharakteristik eines erfindungsgemäß hergestellten Filters vor und nach der Nachbehandlung durch Tempern und UV-Bestrahlung, und
- Fig. 4: eine schematische Ansicht eines Steppers zur Belichtung von Wafern mit einem Filter, wie er beispielhaft in Fig. 1 dargestellt ist,

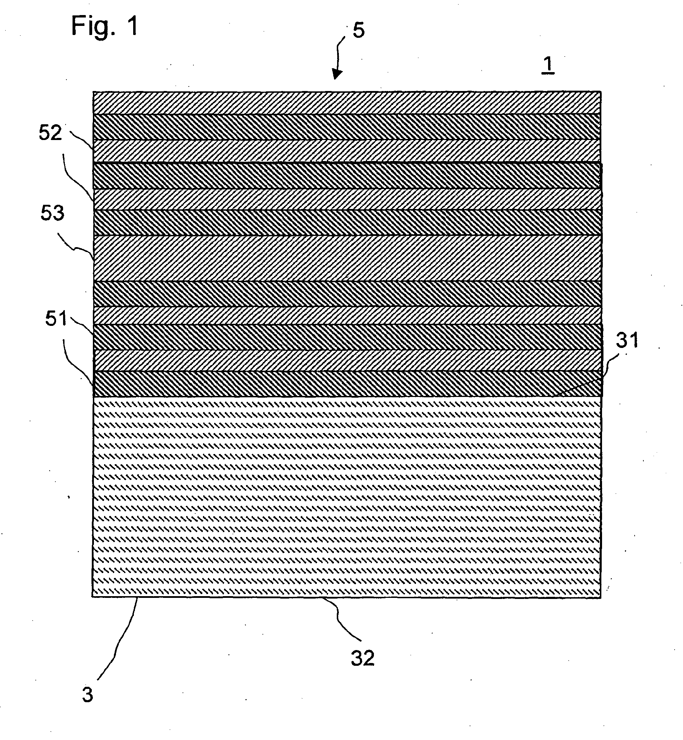

Fig. 1 zeigt schematisch einen dielektrischen Transmissions-Interferenzfilter 1 für die Ausfilterung der i-Linie einer Quecksilber-Dampflampe. Der Filter umfasst ein für die i-Linie, beziehungsweise für Licht einer Wellenlänge von 365 Nanometern transparentes Substrat 3 mit Seiten 31, 32. Geeignet als Material für das Substrat ist beispielsweise Glas.

Auf dem Substrat ist ein Interferenz-Wechselschichtsystem 5 mit abwechselnden Lagen 51, 52 abgeschieden. Dabei wechseln sich Lagen 51 und Lagen 52 jeweils ab, wobei die Lagen 51 einen höheren Brechungsindex als die Lagen 51 aufweisen und im folgenden der Einfachheit halber als hochbrechende Lagen bezeichnet werden.

Die hochbrechenden Lagen 5 werden durch Coverdampfung von Sb₂O₃ und PbF₂, die niedrigbrechenden Lagen 52 durch Coverdampfung von PbF₂ und MgF₂ hergestellt, wobei für jedes der Materialien eine eigene Quelle verwendet wird.
Allgemein eignet sich insbesondere Elektronenstrahlverdampfung, um die hochschmelzenden Materialien abzuscheiden. Im Schichtsystem können eine oder mehrere Lagen als Spacer- oder Resonatorlagen vorgesehen sein. Das in Fig. 1 gezeigte Beispiel weist eine solche Lage 53 auf. Die eine oder mehreren Resonatorlagen weisen eine optische Dicke auf, die ein ungeradzahliges Vielfaches der halben Designwellenlänge λ aufweist. Die optische Dicke der anderen Lagen liegt jeweils bei einem ungeradzahligen Vielfachen von λ/4.

Die Anzahl der Schichten ist vorzugsweise größer als in dem in Fig. 1 gezeigten Beispiel, um mit hinreichender Schmalbandigkeit eine bestimmte UV-Linie des Spektrums einer Dampflampe möglichst selektiv ausfiltern zu können. Beispielsweise kann das Schichtsystem 29 Lagen 51, 52 einschließlich von drei Resonatorlagen 53 aufweisen. Mit einem solchen Schichtsystem kann ein Transmissionsfenster um die Quecksilber-i-Linie mit einer Halbwertsbreite von 12 Nanometern erzielt werden. Gemäß einem weiteren Beispiel sind 27 Lagen 51, 52 einschließlich von zwei Resonatorlagen 53 vorgesehen. Damit kann ein Transmissionsfenster von 6 Nanometer Halbwertsbreite um die Designwellenlänge von 365 Nanometern, entsprechend der Wellenlänge der Quecksilber-i-Linie erreicht werden.

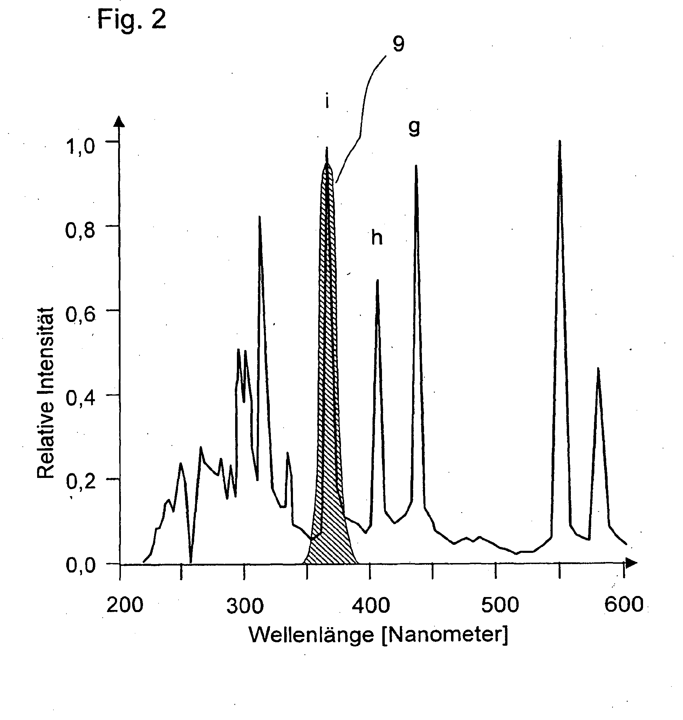

Fig. 2 zeigt zur Verdeutlichung ein Spektrum einer Quecksilber-Dampflampe. Die i-, h- und g-Linien des Quecksilber-Spektrums sind mit den entsprechenden Buchstaben gekennzeichnet. Besonders geeignet für die Lithografie ist die i-Linie. Demgemäß sollten die g- und h-Linien bei 436 Nanometern Wellenlänge, beziehungsweise 405 Nanometern Wellenlänge möglichst durch den Filter abgeschirmt werden. Dazu ist eine entsprechend schmalbandige Filterung um eine Designwellenlänge entsprechend der i-Linie herum günstig. Damit geht andererseits einher, daß die Lichtintensitäteiner Anordnung mit Quecksilber-Dampflampe und einem solchen Filter sehr empfindlich von der spektralen Lage des Transmissionsfensters des Filters abhängt.

Dies wird auch anhand des in Fig. 2 eingezeichneten Ausschnitts der spektralen Transmission mit dem Transmissionsfenster 9 deutlich. Das Fenster hat eine Halbwertsbreite von etwa 12 Nanometern, entsprechend dem oben beschriebenen Beispiel eines Filters mit 29 Lagen. Fallen die zentrale Wellenlänge des Fensters, also dessen Maximum und die i-Linie nicht mehr genau zusammen, kommt es aufgrund der Faltung der Emissionslinie mit der Form des Fensters 9 sehr schnell zu einem Nachlassen der Lichtintensität und einer spektralen Verbreiterung. Dieser Effekt ist selbstverständlich bei einem noch schmalbandigeren Filter mit einem Fenster von 6 Nanometern Halbwertsbreite noch stärker.

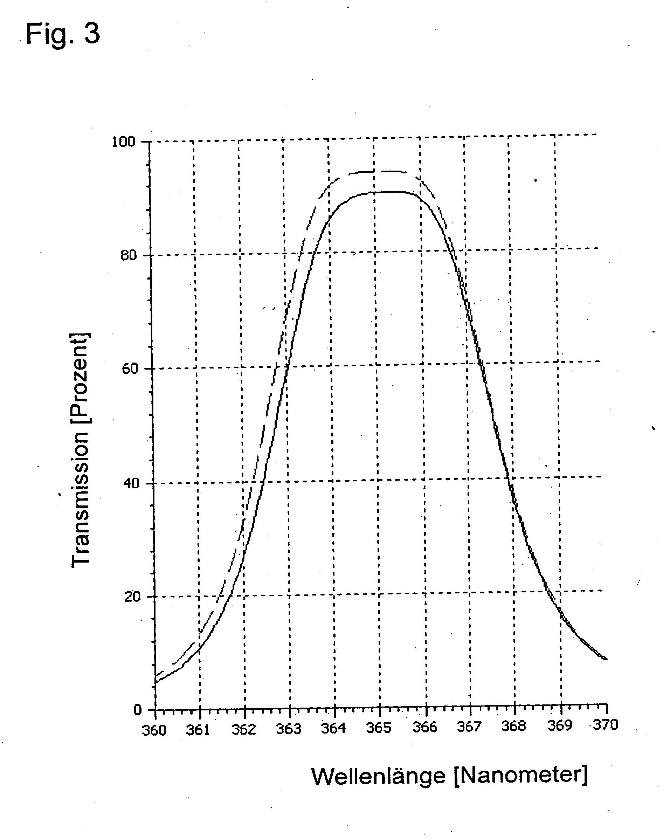

Fig. 3 zeigt eine Darstellung der Transmissionscharakteristik eines erfindungsgemäß hergestellten Filters vor und nach der Nachbehandlung durch Tempern und UV-Bestrahlung. Die durchgezogene Kurve ist dabei der spektrale Transmissionsverlauf des nicht nachbehandelten Filters, die gestrichelt eingezeichnete Kurve zeigt den Transmissionsverlauf eines getemperten und mit UV-Licht bestrahlten Filters. Die Kurven wurden jeweils anhand der auftretenden Brechungsindex-Änderungen in den hoch- und niedrigbrechenden Lagen berechnet. Der Brechungsindex in den hoch- und niedrigbrechenden Lagen erhöht sich dabei in unterschiedlicher Weise. Im Speziellen wurde in der hochbrechenden Sb₂O₃+PbF₂ Schicht eine Erhöhung um Δn = 0,003 und in der niedrigbrechenden MgF₂+PbF₂ Mischschicht um Δn = 0,01 angenommen.

Der Grund für die unterschiedliche Erhöhung des Brechungsindex liegt darin, daß sich unterstöchiometrisches Bleifluorid PbₓF_{y} im Verlauf des Temperns und insbesondere der UV-Bestrahlung in PbₐO_{b}F_{c} umwandelt und der Brechungsindex sich erhöht. Auch im Magnesiumfluorid tritt dieser Effekt auf. Da das hochbrechende Material weniger Fluor enthält, also der Migrationseffekt von Sauerstoff zum Bleioxid nicht so stark sein wird, wie beim niedrigbrechenden Material, ist auch die Verschiebung des Brechungsindex größer.

Durch diese unterschiedlich starke relative Veränderung der Brechungsindizes entsteht möglicherweise auch ein geringerer Brechungsindex-Unterschied zwischen hoch- und niedrigbrechender Schicht, wodurch sich die Halbwertsbreite des Filter etwas erhöht, was auch in der Praxis zu beobachten ist.

Die in der Praxis zu beobachtende Transmissionserhöhung wurde bei der Berechnung der in Fig. 3 gezeigten Kurven durch eine Verringerung des Absorptionskoeffizienten nach dem Tempern und der UV-Bestrahlung simuliert.

Wie anhand der Transmissionsverläufe zu erkennen ist, verschiebt sich aufgrund der Brechungsindex-Änderungen der einzelnen Lagen die spektrale Lage der zentralen Transmissionswellenlänge -hier die mittlere Wellenlänge des plateauförmigen Transmissionsmaximums- um etwa 0,2 Nanometer hin zu größeren Wellenlängen.

Bei den Schichtdicken der Lagen wird allgemein also ohne Beschränkung auf das Beispiel der Fig. 3 ein entsprechender Vorhalt eingestellt, so daß nach dem Tempern und der UV-Bestrahlung die gewünschte zentrale Transmissionswellenlänge erreicht wird. Bei dem in Fig. 3 gezeigten Beispiel, wie auch in bevorzugter Ausführungsform der Erfindung ist dies eine Wellenlänge von 365 Nanometern, beziehungsweise die i-Linie des Spektrums einer Quecksilber-Dampflampe.

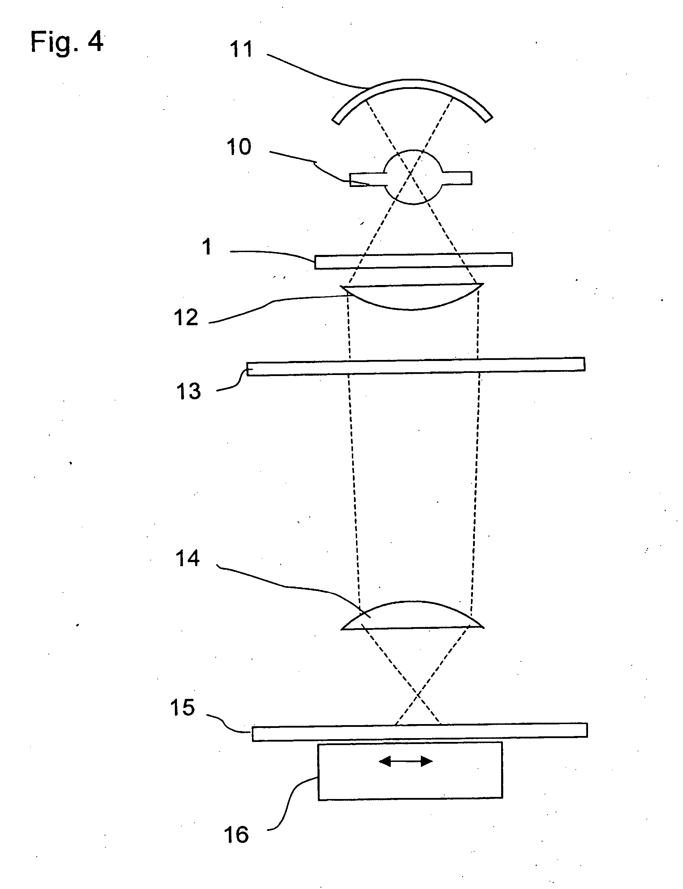

Fig. 4 zeigt eine schematische Ansicht eines Wafer-Steppers, für welchen die erfindungsgemäß hergestellten Interferenzfilter bevorzugte Verwendung finden. Der Stepper umfasst eine Quecksilber-Dampflampe 10, welche Licht mit einem Spektrum emittiert, wie es in Fig. 2 dargestellt ist. Mit einem Hohlspiegel 11 wird rückseitig zum optischen Pfad abgestrahltes Licht zurückreflektiert. Das Licht wird mittels eines erfindungsgemäß hergestellten Interferenzfilters 1 gefiltert, so daß nach dem Interferenzfilter 1 im wesentlichen nur noch Licht der i-Linie des Quecksilbers vorhanden ist.

Das Licht wird mittels einer Kondensorlinse 12 gesammelt und durchläuft eine Maske 13 mit dem auf die Photolackschicht auf einem Wafer 15 zu übertragendes Muster Mittels einer Verkleinerungslinse 14 wird das Bild der Maske 13 dann verkleinert auf dem Wafer 15 abgebildet. Mittels einer Steppereinheit 16 wird der Wafer 15 in der Bildebene schrittweise bewegt, so daß nacheinander verschiedene Bereiche des Wafers 15 belichtet werden.

Es ist dem Fachmann ersichtlich, daß die Erfindung nicht auf die lediglich beispielhaften vorstehend beschriebenen Ausführungsbeispiele beschränkt ist, sondern vielmehr in vielfältiger Weise variiert,werden kann. Insbesondere können die einzelnen Merkmale der Ausführungsbeispiele auch miteinander kombiniert werden.

## Patentansprüche

1. Verfahren zur Herstellung eines dielektrischen Transmissions-Interferenzfilters (1), insbesondere eines Transmissions-Interferenzfilters für die Halbleiter-Lithographie, bei welchem ein Substrat (3) in einer Verdampfungskammer angeordnet und abwechselnd Lagen (51), (52) mit höherem Brechungsindex und niedrigerem Brechungsindex auf dem Substrat abgeschieden werden, wobei die Lagen jeweils durch Coverdampfung zumindest zweier der Bestandteile Magnesiumfluorid, Bleifluorid und Antimonoxid hergestellt werden,
und wobei das Substrat nach der Abscheidung der Lagen bei einer Temperatur von zumindest 50°C getempert und für eine Dauer von zumindest 5 Stunden mit UV-Licht bestrahlt wird, wodurch sich die zentrale Wellenlänge des Transmissionsfensters bei der Transmission des Filters für die zentrale Transmissionswellenlänge innerhalb eines spektralen Transmissionfensters im Verlauf der Bestrahlung erniedrigt.

2. Verfahren gemäß dem vorstehenden Anspruch, **dadurch gekennzeichnet, daß** das Abscheiden der Lagen mit niedrigerem Brechungsindex das Verdampfen von Magnesiumfluorid und Bleifluorid und das Abscheiden der Lagen mit höherem Brechungsindex das Verdampfen von Bleifluorid und Antimonoxid umfasst, so daß die Lagen mit niedrigerem Brechungsindex eine Mischung von Magnesiumfluorid und Bleifluorid und die Lagen mit höherem Brechungsindex eine Mischung von Bleifluorid und Antimonoxid enthalten.

3. Verfahren gemäß Anspruch 1, **dadurch gekennzeichnet, daß** das Abscheiden der Lagen mit niedrigerem Brechungsindex das Verdampfen von Magnesiumfluorid und Antimonoxid und das Abscheiden der Lagen mit höherem Brechungsindex das Verdampfen von Bleifluorid und Antimonoxid umfasst, so daß die Lagen mit niedrigerem Brechungsindex eine Mischung von Magnesiumfluorid und Antimonoxid und die Lagen mit höherem Brechungsindex eine Mischung von Bleifluorid und Antimonoxid enthalten.

4. Verfahren gemäß einem der vorstehenden Ansprüche, **dadurch gekennzeichnet, daß** bei der Temperung eine Sauerstoff-Nachbeladung der Lagen unter Einwirkung von UV-Licht erfolgt.

5. Verfahren gemäß einem der vorstehenden Ansprüche, **dadurch gekennzeichnet, daß** die Schichtdicken der Lagen so abgestimmt werden, daß das Transmissionsfenster nach der UV-Bestrahlung eine spektrale Lage aufweist, dessen langwelligere Kante bei einer Wellenlänge kleiner als 450 Nanometern liegt, wobei die Lagen in einer Dicke, die ein Vielfaches des Viertels einer Designwellenlänge λ betragen, abgeschieden werden, und wobei die Designwellenlänge λ kleiner als 450 nm ist.

6. Verfahren dem vorstehenden Anspruch, **dadurch gekennzeichnet, daß** die Anzahl und Schichtdicke der Lagen so gewählt wird, daß das Transmissionsmaximum eine Halbwertsbreite von höchstens 20 Nanometern, vorzugsweise höchstens 15 Nanometern aufweist.

7. Verfahren gemäß einem der vorstehenden Ansprüche, **dadurch gekennzeichnet, daß** die Bestrahlung mit einer Quecksilber-Dampflampe oder einer Lampe, welche UV-Licht bei 365 Nanometer Wellenlänge abgibt, bestrahlt wird.

8. Verfahren gemäß einem der vorstehenden Ansprüche, **dadurch gekennzeichnet, daß** das Substrat nach der Beschichtung für zumindest 12 Stunden getempert wird.

9. Verfahren gemäß einem der vorstehenden Ansprüche, **dadurch gekennzeichnet, daß** das Substrat bei Temperaturen unterhalb von 250 °C getempert wird.

10. Verfahren gemäß einem der vorstehenden Ansprüche, **dadurch gekennzeichnet, daß** eine Substratfläche mit einer seitlichen Abmessung oder einem Durchmesser von zumindest 100 Millimetern beschichtet wird.

11. Verfahren gemäß einem der vorstehenden Ansprüche, **dadurch gekennzeichnet, daß** insgesamt mindestens 15 Lagen, vorzugsweise mindestens 20 Lagen aufeinander abgeschieden werden.

12. Verfahren gemäß einem der vorstehenden Ansprüche, wobei ein Wechselschichtsystem abgeschieden wird, wobei das Wechselschichtsystem abwechselnde erste und zweite Lagen unterschiedlicher Zusammensetzung der Bestandteile Antimonoxid, Magnesiumfluorid und Bleifluorid umfasst, wobei nach der Beschichtung eine Verschiebung der zentralen Wellenlänge eines Transmissions- oder Reflexionsfensters zu kürzeren Wellenlängen in Richtung auf die Designwellenlänge hin erfolgt, indem das beschichtete Substrat getempert und zumindest für 5 Stunden mit UV-Licht bestrahlt wird.

13. Verfahren gemäß einem der vorstehenden Ansprüche, **dadurch gekennzeichnet, daß** die zentrale Wellenlänge des Transmissionsfensters beim Tempern und bei der UV-Bestrahlung um zumindest 0,1 Nanometer, vorzugsweise zumindest 0,2 Nanometer zu kürzeren Wellenlängen hin verschoben wird.

## Claims

1. A method for producing a dielectric transmission interference filter (1), in particular a transmission interference filter for semiconductor lithography, wherein a substrate (3) is disposed in an evaporation chamber, and layers (51, 52) having a higher refractive index and a lower refractive index are alternately deposited on the substrate, wherein each of the layers is produced by co-evaporation of at least two of the constituents magnesium fluoride, lead fluoride, and antimony oxide;
and wherein after the deposition of the layers the substrate is subjected to a heat treatment at a temperature of at least 50 °C and is irradiated with UV light for a duration of at least 5 hours, wherein during the irradiation the central wavelength of the transmission window in the transmission of the filter for the center transmission wavelength within a spectral transmission window is decreasing.

2. The method according to the preceding claim, **characterized in that** the deposition of the layers having a lower refractive index comprises the evaporation of magnesium fluoride and lead fluoride, and the deposition of the layers having a higher refractive index comprises the evaporation of lead fluoride and antimony oxide, so that the layers having a lower refractive index comprise a mixture of magnesium fluoride and lead fluoride and the layers having a higher refractive index comprise a mixture of lead fluoride and antimony oxide.

3. The method according to claim 1, **characterized in that** the deposition of the layers having a lower refractive index comprises the evaporation of magnesium fluoride and antimony oxide, and the deposition of the layers having a higher refractive index comprises the evaporation of lead fluoride and antimony oxide, so that the layers having a lower refractive index comprise a mixture of magnesium fluoride and antimony oxide and the layers having a higher refractive index comprise a mixture of lead fluoride and antimony oxide.

4. The method according to any of the preceding claims, **characterized in that** during the heat treatment the layers are subjected to oxygen post-loading under exposure to UV light.

5. The method according to any of the preceding claims, **characterized in that** the layer thicknesses of the layers are adjusted so that after the UV irradiation the transmission window has a spectral position whose longer wavelength edge is at a wavelength of less than 450 nanometers, wherein the layers are deposited in a thickness that is a multiple of a quarter of a design wavelength λ, and wherein the design wavelength λ is less than 450 nm.

6. The method according to the preceding claim, **characterized in that** the number and thickness of the layers is selected so that the transmission maximum has a full width at half maximum of not more than 20 nanometers, preferably not more than 15 nanometers.

7. The method according to any of the preceding claims, **characterized in that** the irradiation is performed using a mercury vapour lamp or a lamp which emits UV light at a wavelength of 365 nm.

8. The method according to any of the preceding claims, **characterized in that** after coating the substrate is subjected to a heat treatment for at least 12 hours.

9. The method according to any of the preceding claims, **characterized in that** the substrate is subjected to the heat treatment at temperatures below 250 °C.

10. The method according to any of the preceding claims, **characterized in that** a substrate area having a lateral dimension or a diameter of at least 100 millimeters is coated.

11. The method according to any of the preceding claims, **characterized in that** a total of at least 15 layers, preferably at least 20 layers are deposited one on top of another.

12. The method according to any of the preceding claims, wherein a system of alternating layers is deposited, wherein the system of alternating layers comprises alternating first and second layers having a different composition of the constituents antimony oxide, magnesium fluoride, and lead fluoride, wherein after the coating a shift of the central wavelength of a transmission or reflection window to shorter wavelengths in the direction of the design wavelength is accomplished by subjecting the coated substrate to a heat treatment and to irradiation with UV light for at least 5 hours.

13. The method according to any of the preceding claims, **characterized in that** during the heat treatment and UV irradiation the central wavelength of the transmission window is shifted to shorter wavelengths by at least 0.1 nanometers, preferably at least 0.2 nanometers.

## Revendications

1. Procédé de fabrication d'un filtre d'interférence de transmission diélectrique (1), en particulier d'un filtre d'interférence de transmission pour la lithographie à semi-conducteur, où un substrat (3) est disposé dans une chambre de vaporisation et où des couches (51, 52) à indice de réfraction élevé et à indice de réfraction faible sont déposées en alternance sur le substrat, les couches étant respectivement produites par vaporisation de couverture d'au moins deux des composants que sont le fluorure de magnésium, le fluorure de plomb et l'oxyde d'antimoine,
et le substrat étant recuit à une température d'au moins 50°C après dépôt des couches, et irradié par une lumière UV pendant une durée d'au moins 5 heures, la longueur d'onde centrale de la fenêtre de transmission étant ainsi abaissée à la transmission du filtre pour la longueur d'onde centrale de transmission à l'intérieur d'une fenêtre de transmission spectrale lors de l'irradiation.

2. Procédé selon la revendication précédente, **caractérisé en ce que** le dépôt des couches à faible indice de réfraction comprend la vaporisation de fluorure de magnésium et de fluorure de plomb, et le dépôt des couches à indice de réfraction élevé comprend la vaporisation de fluorure de plomb et d'oxyde d'antimoine, si bien que les couches à faible indice de réfraction contiennent un mélange de fluorure de magnésium et de fluorure de plomb et les couches à indice de réfraction élevé un mélange de fluorure de plomb et d'oxyde d'antimoine.

3. Procédé selon la revendication 1, **caractérisé en ce que** le dépôt des couches à faible indice de réfraction comprend la vaporisation de fluorure de magnésium et d'oxyde d'antimoine, et le dépôt des couches à indice de réfraction élevé comprend la vaporisation de fluorure de plomb et d'oxyde d'antimoine, si bien que les couches à faible indice de réfraction contiennent un mélange de fluorure de magnésium et d'oxyde d'antimoine et les couches à indice de réfraction élevé un mélange de fluorure de plomb et d'oxyde d'antimoine.

4. Procédé selon l'une des revendications précédentes, **caractérisé en ce qu'**une recharge en oxygène des couches se produit lors du recuit sous l'effet de la lumière UV.

5. Procédé selon l'une des revendications précédentes, **caractérisé en ce que** les épaisseurs des couches dont déterminées de telle manière que la fenêtre de transmission présente après irradiation une couche spectrale dont le bord de plus grande longueur d'onde est compris dans une plage de longueur d'onde inférieure à 450 nanomètres, les couches étant déposées avec une épaisseur multiple du quart d'une longueur d'onde nominale λ, et la longueur d'onde nominale λ étant inférieure à 450 nm.

6. Procédé selon la revendication précédente, **caractérisé en ce que** le nombre et l'épaisseur des couches sont sélectionnées de telle manière que le maximum de transmission présente une demi-largeur de 20 nanomètres au plus, préférentiellement de 15 nanomètres au plus.

7. Procédé selon l'une des revendications précédentes, **caractérisé en ce que** l'irradiation est effectuée avec une lampe à vapeur de mercure ou une lampe diffusant une lumière UV à 365 nanomètres de longueur d'onde.

8. Procédé selon l'une des revendications précédentes, **caractérisé en ce que** le substrat est recuit pendant au moins 12 heures après revêtement.

9. Procédé selon l'une des revendications précédentes, **caractérisé en ce que** le substrat est recuit à température inférieure à 250°C.

10. Procédé selon l'une des revendications précédentes, **caractérisé en ce qu'**une surface de substrat avec une dimension de côté ou un diamètre d'au moins 100 millimètres est revêtue.

11. Procédé selon l'une des revendications précédentes, **caractérisé en ce qu'**au moins 15 couches, préférentiellement au moins 20 couches au total sont déposées l'une sur l'autre.

12. Procédé selon l'une des revendications précédentes, ou un système de couches alternées est déposé, ledit système de couches alternées comprenant des premières et des deuxièmes couches alternées de composition différente des composants oxyde d'antimoine, fluorure de magnésium et fluorure de plomb, un décalage de la longueur d'onde centrale d'une fenêtre de transmission ou de réflexion vers des longueurs d'onde plus courtes dans la direction de la longueur d'onde nominale ayant lieu après revêtement, le substrat revêtu étant recuit et irradié par une lumière UV pendant au moins 5 heures.

13. Procédé selon l'une des revendications précédentes, **caractérisé en ce que** la longueur d'onde centrale de la fenêtre de transmission est décalée d'au moins 0,1 nanomètre, préférentiellement d'au moins 0,2 nanomètre vers des longueurs d'onde plus courtes lors du recuit et de l'irradiation UV.
